# EUROPÄISCHE PATENTSCHRIFT

(11) **EP 2 502 354 B1**
(45) Veröffentlichungstag und Bekanntmachung des Hinweises auf die Patenterteilung: **14.09.2016**
(21) Anmeldenummer: 10798965.9
(22) Anmeldetag: 21.12.2010
(51) Int. Cl.: H04B 3/54, H05B 37/02, H02J 13/00, H04L 12/10, H04L 12/40, H04L 12/28

(54) **ELEKTRISCHES INSTALLATIONSSYSTEM**
ELECTRICAL INSTALLATION SYSTEM
SYSTÈME D'INSTALLATION ÉLECTRIQUE

(30) Priorität: 23.12.2009 DE 102009060273
(43) Veröffentlichungstag der Anmeldung: 26.09.2012
(73) Patentinhaber: Schneider Electric Industries SAS, 92500 Rueil-Malmaison (FR)
(72) Erfinder: SCHLECHTINGEN, Peter, 51597 Morsbach (DE); SCHELLBERG, Herrmann, 50737 Köln (DE); GIEREND, Christian, 50354 Hürth (DE)
(74) Vertreter: Manitz, Finsterwald & Partner GbR
(86) Internationale Anmeldenummer: PCT/EP2010/007835
(87) Internationale Veröffentlichungsnummer: WO 2011/076387

(56) Entgegenhaltungen:
- EP-A2- 0 854 668
- EP-A2- 1 489 718
- DE-U1- 29 914 873
- US-A- 5 248 919
- US-A1- 2008 258 650
- "The One-Single-Standard for the integration of Home and Building applications", KNX SYSTEM ARCHITECTURE, KONNEX ASSOCIATIO, BE, 1. Januar 2001 (2001-01-01), Seiten 1-32, XP007919039,
- KYSELYTSYA Y ET AL: "Implementation of the KNX Standard", 20061001, 1. Oktober 2006 (2006-10-01), Seiten 1/11-11/11, XP007919038,

## Beschreibung

Die Erfindung betrifft ein elektrisches Installationssystem nach dem Oberbegriff des Patentanspruchs 1 (vgl. DE 299 14 873 U1).

Im Rahmen der Gebäudeinstallationstechnik existieren verschiedene elektrische Installationssysteme, um die Energieversorgung von elektrischen Lasten zu steuern. Bei einem weit verbreiteten Installationssystem werden in elektrischen Versorgungsleitungen von Lasten Installationsgeräte angeordnet, über die die Lasten direkt und nach unterschiedlichsten Kriterien manuell oder automatisch ansteuerbar sind.

Des weiteren sind Bussysteme bekannt, bei denen Installationsgeräte in Form von Sensoren und Aktoren mittels Telegrammen über Busleitungen kommunizieren und in einem separaten Lastkreis angeordnete Lasten ansteuern. Derartige Bussysteme sind kostenintensiv und lassen sich im Rahmen einer Modernisierung nur mit erheblichem Aufwand installieren.

Darüber hinaus gibt es ein Mischsystem der vorgenannten Systeme, bei dem über vorhandene Versorgungsleitungen zusätzlich Telegramme zur Ansteuerung von Sensoren und Aktoren gesendet werden. Die Kombinierung von Telegrammen und Lastsignalen auf dem selben Leitungsnetz bedingt jedoch eine erhebliche Störanfälligkeit eines solchen Systems.

"The One-Single-Standard for the integration of Home and Building applications", KNX System Architecture, Konnex Association, 1. April 2003, offenbart ein elektrisches Installationssystem für Gebäude, bei dem mehrere Geräte über ein Energieversorgungsnetzwerk miteinander kommunizieren. Ein ähnliches System ist in Kyselytsya Y et. al. "Implementation of the KNX Standard", 1. Oktober 2006, beschrieben.

EP 0 854 668 A2 offenbart ein Bussystem mit Geräten zum Einbau in eine Installationsdose, wobei die Geräte Datentelegramme zum Schalten einer Beleuchtung auf einen Datenbus senden und wobei die Spannungsversorgung und die Datenübertragung über ein einziges Adernpaar erfolgen.

EP 1 489 718 A2 offenbart ein elektrisches Installationssystem zur Steuerung einer elektrischen Gebäudeinstallation mit einer programmierbaren Recheneinheit, welcher zur Schaltung elektrischer Verbraucher über Steuerleitungen Steuersignale zuführbar sind, wobei das Installationssystem über das elektrische Energieversorgungsnetz mit Energie versorgt wird, an dem die Verbraucher angeschlossen sind.

Aus der US 2008/258650 A1 ist ein Laststeuersystem bekannt, bei dem eine Hauptstelle und mehrere Nebenstellen mit einer Last in Serie geschaltet sind.

Aus der US 5 248 919 A ist eine Lichtsteuereinrichtung bekannt, bei der verschiedene Intensitätsstufen vom Benutzer ausgewählt werden können.

Konventionelle Installationssysteme sind in der Funktionsvielfalt gegenüber Bussystemen jedoch deutlich im Nachteil. Bei der Steuerung von Lasten von mehreren Schaltstellen sind herkömmliche Mehrwege- oder Nebenstellenverdrahtungen hinsichtlich der Schaltfunktionen und deren Ausführung sowohl bei der Erstinstallation als bei einer Modernisierung verbesserungsfähig. Die bekannten Funktionen von Nebenstellen ermöglichen nur eine einheitliche Lastveränderung. Eine zentrale Ansteuerung mehrerer Lasten mit unterschiedlichen Lastzuständen ist nicht möglich.

Elektrische Lasten können dabei über unterschiedlich lange Betätigungen an den jeweiligen Installationsgeräten gesteuert werden. Eine Unterscheidung zwischen Schalten und beispielsweise Dimmen wird durch kurze und lange Betätigungszeiten erreicht. Bei langer Betätigung wird gedimmt, während eine kurze Betätigung ein Ein- bzw. Ausschalten der Last bewirkt. Während der Betätigungszeit wird ein entsprechend andauernder Schaltimpuls in Form eines analogen Spannungspegels von der Nebenstelle an den Last schaltenden Einsatz einer Hauptstelle übertragen.

Die Signallänge als Entscheidungsparameter kann kritisch sein, da abhängig vom Zeitpunkt des Aufeinandertreffens des Betätigungssignals und einer Auswertungsroutine einer Steuerungselektronik der Hauptstelle nicht immer eine identische Aktion an der Last generiert wird. Dies kann insbesondere bei der zentralen Ansteuerung mehrerer Hauptstellen nachteilig sein, da die Auswertungsroutinen in den einzelnen Hauptstellen nicht synchronisiert ablaufen und möglicherweise nicht bei allen angeschlossenen Lasten die gleiche Schaltaktion ausgeführt wird. Beispielsweise können einzelne Lasten beabsichtigungsgemäß ausgeschaltet werden, während bei anderen Lasten entgegen der Absicht ein Dimmprozess erfolgt.

Die Aufgabe der vorliegenden Erfindung besteht darin, ein elektrisches Installationssystem zu schaffen, das erweiterte Funktionalitäten im Nebenstellenbetrieb ermöglicht und zuverlässige Schaltaktionen generiert.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass ein bestehendes Installationssystem bei denen Installationsgeräte und Lasten in einem Stromkreis angeordnet sind und eine Ansteuerung der Lasten von beabstandet angeordneten Installationsgeräten erfolgt, mit geringem Aufwand durch Nutzung vorhandener Leitungssysteme und durch einfachen Austausch von Installationsgeräten funktional erweitert werden können. Die Installationsgeräte können mit multiplen Schaltfunktionen ausgestattet werden. Von Nebenstellen können zentral unterschiedliche Zustände an Last schaltenden Hauptstellen gesteuert werden. Im Nebenstellenbetrieb können mehrdeutige Schaltimpulse vermieden werden. Es entsteht ein komfortables und zuverlässiges System, das sowohl im Rahmen einer Modernisierung als auch als bei der Erstinstallation verwendet werden kann.

Ein bestehendes, vorzugsweise 2-adriges, Leitungssystem zwischen Installationsgeräten an Nebenstellen und an Hauptstellen kann weiter genutzt werden. Eine Ergänzung, z. B. durch separate oder zusätzliche Busleitungen, ist nicht notwendig. In der bestehenden Verdrahtung zwischen den Bedienstellen kann die eine Ader zur beiderseitigen Spannungsversorgung genutzt werden, während die weitere Ader als Telegrammleitung dienen kann, die die Bedienstellen untereinander verbindet.

Vorhandene Installationsgeräte an den jeweiligen Bedienstellen müssen ausgetauscht werden, wobei der prinzipielle Geräteaufbau erhalten bleiben kann. Ein erstes Installationsgerät für eine Last schaltende Hauptstelle kann ein Schaltmodul und ein vorgesetztes Applikationsmodul mit Elektronikbaugruppen und frontseitig angeordneten Bedienelementen umfassen. Ein zweites Installationsgerät für eine Nebenstelle kann eine Baugruppe zur Energieversorgung und eine Baugruppe zur Telegrammerzeugung sowie frontseitig angeordneten Bedienelementen aufweisen.

Die Energieversorgung des zweiten Installationsgerätes erfolgt über das Leitungssystem zum ersten Installationsgerät und die daran angeschlossene Last. Die Konfiguration der Bauteile des zweiten Installationsgerätes kann so gewählt werden, dass die auf diesem Wege zur Verfügung stehende Energiemenge die notwendigen Funktionen hinreichend gewährleistet. Mit der Energiemenge können Telegramme erzeugt werden und interne Bauelemente versorgt werden. Die Energie wird in dem zweiten Installationsgerät in einer internen, vorzugsweise kapazitiv wirkenden, Baugruppe gepuffert. Die Energieversorgung des zweiten Installationsgerätes kann stetig, vorteilhafterweise auch während einer Telegrammübertragung, erfolgen. Eine separate oder andere Spannungsversorgung ist nicht notwendig.

In dem zweiten Installationsgerät (Nebenstelle) löst eine Bedienaktion innerhalb der Baugruppe zur Telegrammerzeugung, vorzugsweise unter Nutzung eines Mikroprozessors, eine Generierung digitaler Signale aus, die über die vorhandene (dann gegen Phase kurzgeschlossene) Ader als Telegramm an das Applikationsmodul des ersten Installationsgerätes (Hauptstelle) übertragen werden. Das Telegramm wird unidirektional in Richtung der empfangenden Hauptstelle verschickt. Um Kollisionen mit anderen Telegrammen auf derselben Leitung zu vermeiden, arbeiten alle Systemkomponenten nach dem Prinzip "listen before talk". Der Informationsgehalt des Telegramms ermöglicht eine eindeutige Auswertung in dem ersten Installationsgerät (Hauptstelle), so dass die angeschlossene Last in beabsichtigter Weise angesteuert werden kann.

Das Telegramm kann eine Information über die Länge der Betätigung eines Bedienelementes und/oder eine Information, welches Bedienelement des zweiten Installationsgerätes betätigt wird, beinhalten. Es werden keine Werte, z. B. Dimmstärken, übertragen.

Wesentlich ist dabei, dass das Zeitkriterium in dem zweiten Installationsgerät in ein digitales Telegramm umgewandelt wird. Somit ist ausgeschlossen, dass ein über die Länge des Spannungssignals definierte Schaltaktion abhängig von unsynchronisierten Auswertestrukturen als lange oder kurze Betätigung mit uneinheitlicher Lastaktion interpretiert wird.

Erfindungsgemäß enthält das Telegramm Informationen zur Identifizierung des Bedienelementes eines zweiten Installationsgerätes. Durch diese Unterscheidung können zweite Installationsgeräte mehrere Bedienelemente aufweisen, so dass komfortable Schaltaktionen möglich sind. Neben Bedienelementen für das Auf- und Abdimmen können so auch zusätzlich Bedienelemente für die Aktivierung von nutzerdefinierten Lasteinstellungen geschaffen werden. Von Nebenstellen können somit mehrere Hauptstellen unabhängig voneinander betätigt werden.

Die Einstellung der nutzerdefinierten Lastzustände für eine sogenannte Szene erfolgt mittels lokaler Einstellung eines Lastzustandes und Zuordnung zum entsprechenden Bedienelement eines ersten Installationsgerätes (Hauptstelle). Bei einer Betätigung des entsprechenden Bedienelementes an einem zweiten Installationsgerät (Nebenstelle) wird dann auf Grund der übermittelten Telegramminformation der zugeordnete Lastzustand in dem ersten Installationsgerät abgerufen. Die Anordnung und Ansteuerung der Bedienelemente sollte an den beteiligten Installationsgeräten einheitlich sein, um Fehlfunktionen zu vermeiden. Vorzugsweise können den Bedienelementen deshalb vordefinierte Funktionen zugewiesen werden.

Weiterhin ist eine Kombination mit mechanischen Tastern als Nebenstelle möglich, da die Installationsmethodik beibehalten wird. Der mechanische Taster dominiert immer die elektronischen Nebenstellen, da dieser Taster im betätigten Zustand immer einen Kurzschluss der Telegrammleitung gegen Phase darstellt.

Des weiteren kann die Erfindung bei der Integration von weiteren Funktionalitäten in Installationssysteme Verwendung finden. Beispielsweise lassen sich zusätzlich Zentralsteuerungen und Signalgeber (Schaltuhren, Bewegungsmelder, Funkkomponenten) sowie Zeit, Wind oder Licht gesteuerte Elemente in das System integrieren. Die Geräte können zu Linien, Gruppen und weiteren Systemen zusammenfasst werden. Optional können die Geräte auch mit 3-Leiter-Technik ausgestattet sein, d. h. mit direkter 2-adriger Anbindung an das Versorgungsnetz und einer Telegrammader.

Neben drahtgebundenen Bauelementen können auch drahtlos wirkende Bauelemente verwendet werden, beispielsweise zur Datenübertragung mittels Funk- oder Infrarotsignalen. Vorteilhafterweise kann ein drahtlos kommunizierendes Funktionsmodul in ein Installationsgerät integriert werden. Die notwendige Spannungsversorgung kann über den Gerätesockel geliefert werden, während die Signalübertragung drahtlos erfolgen kann.

Vorteilhafte Anwendungsbereiche des erfindungsgemäßen Installationssystems können sich im Bereich der Beleuchtungs- oder der Jalousiesteuerung ergeben.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: schematisch eine bekannte Wechselschaltung,
- Fig. 2: schematisch eine bekannte Nebenstellenschaltung,
- Fig. 3: schematisch eine erfindungsgemäße Nebenstellenschaltung,
- Fig. 4: schematisch einen Aufbau eines ersten Installationsgerätes (Hauptstelle),
- Fig. 5: schematisch einen Aufbau eines zweiten Installationsgerätes (Nebenstelle),
- Fig. 6a: ein Telegramm einer kurzen Betätigung eines zweiten Installationsgerätes,
- Fig. 6b: ein Telegramm einer langen Betätigung eines zweiten Installationsgerätes,
- Fig. 7: schematisch eine erweiterte Schaltungsanordnung mit mehreren zweiten Installationsgeräten,
- Fig. 8: schematisch eine erweiterte Schaltungsanordnung mit einem mechanischen Taster und
- Fig. 9: schematisch eine erweiterte Schaltungsanordnung mit gruppierten Installationsgeräten.

Gleiche oder gleichwirkende Bauteile sind in der nachfolgenden Beschreibung mit gleichen Bezugszeichen versehen.

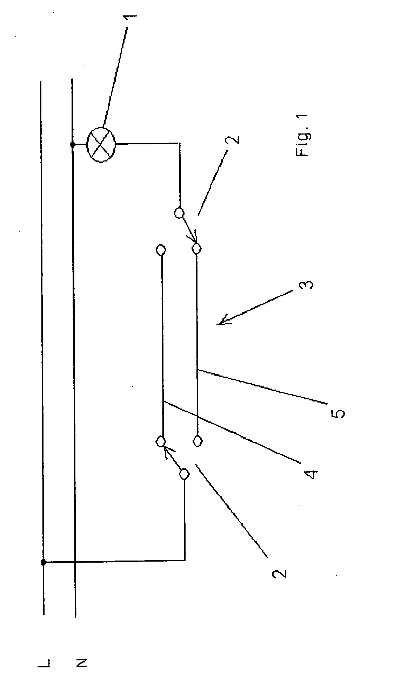

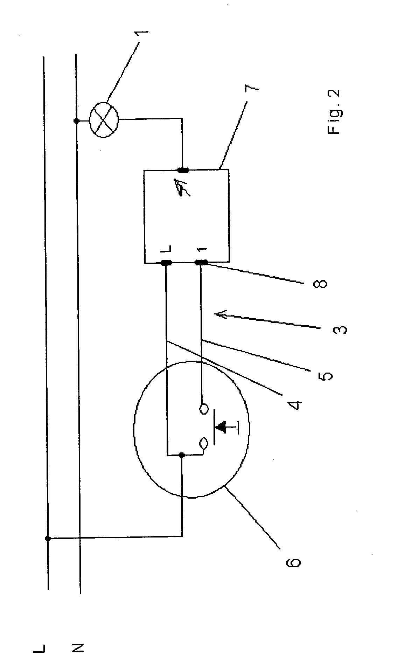

In den Figuren 1 und 2 sind schematisch zwei Schaltungsanordnungen skizziert, die den Stand der Technik darstellen.

In Figur 1 ist eine herkömmliche Wechselschaltung dargestellt, bei der eine Last 1 über zwei entfernt voneinander angeordnete Bedienstellen in Form von mechanischen Schaltern 2 ein- bzw. ausgeschaltet werden kann. Die Schalter 2 unterbrechen oder schließen dabei ein direkt zur Last 1 führendes Leitungssystem 3. Die Schalter 2 sind untereinander über zwei wechselseitig genutzte Adern 4 und 5 verbunden. Die Last 1 wird in der Beschreibung beispielshaft als Leuchtmittel betrachtet. Es sind jedoch auch andere Lasttypen einsetzbar, zum Beispiel Jalousien oder andere motorisch gesteuerte Verbraucher.

In Figur 2 ist eine etwas komfortablere Lösung dargestellt, wobei anstelle der beiden mechanischen Schalter einerseits ein Taster 6 und andererseits ein Installationsgerät 7 mit Dimmfunktion benutzt werden. Die Helligkeit der an das Installationsgerät 7 angeschlossenen Last 1 kann am Installationsgerät 7, einer sogenannten Hauptstelle, direkt eingestellt werden. Der Taster 6 stellt eine Nebenstelle dar und wirkt als parallel geschaltete Bedienstelle auf das Installationsgerät 7 ein, um die Helligkeit der Last 1 einstellen zu können. Haupt- und Nebenstelle sind über ein Leitungssystem 3 verbunden, wobei die Ader 4 die Spannungsversorgung des Installationsgerätes 7 gewährleistet, während die Ader 5 als Schaltdraht fungiert und an einen sogenannten Nebenstellenanschluss 8 des Installationsgerätes 7 angeschlossen ist. Bei einer Betätigung des Tasters 6 wird ein der Betätigungsdauer entsprechendes analoges Signal über die Ader 5 an das Installationsgerät 7 übertragen. Die Signallänge dient dabei als Kriterium für ein Ein- oder Ausschalten bzw. Auf- oder Abdimmen der Last 1, wobei nur vom jeweiligen Lastzustand ausgehend in den entgegengesetzten Lastzustand gesteuert werden kann.

Nachfolgend werden der Aufbau und die Funktionsweise des erfindungsgemäßen elektrischen Installationssystems schematisch anhand von Ausführungsbeispielen näher beschrieben.

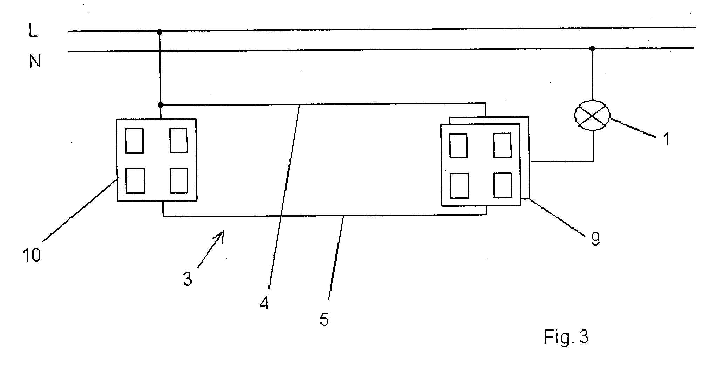

Das erfindungsgemäße Installationssystem eignet sich beispielsweise um die in der Figur 1 und in der Figur 2 dargestellten herkömmlichen Installatiönssysteme funktional zu erweitern bzw. sicherer in ihrer Anwendung zu machen. Hierzu werden die Installationsgeräte an den jeweiligen Bedienstellen ausgetauscht. Dabei wird die der Last 1 schaltungstechnisch zugeordnete Bedienstelle (Hauptstelle) mit einem ersten Installationsgerät 9 und die andere, räumlich beabstandete Bedienstelle (Nebenstelle) mit einem zweiten Installationsgerät 10 ausgestattet. Das vorhandene Leitungssystem 3 kann weiter genutzt werden, wobei die Ader 4 die Verbindung von einer externen Spannungsversorgung zu dem ersten Installationsgerät 9 und zu dem zweiten Installationsgeräten 10 schafft, während die Ader 5 die Installationsgeräte 9 und 10 untereinander verbindet. Neben der in der Figur 3 dargestellten Konfiguration kann das Installationssystem weitere erste Installationsgeräte 9 und zweite Installationsgeräte 10 aufweisen, die parallel zueinander verschaltet werden. Das Installationssystem kann auch im Rahmen einer Erstinstallation realisiert werden.

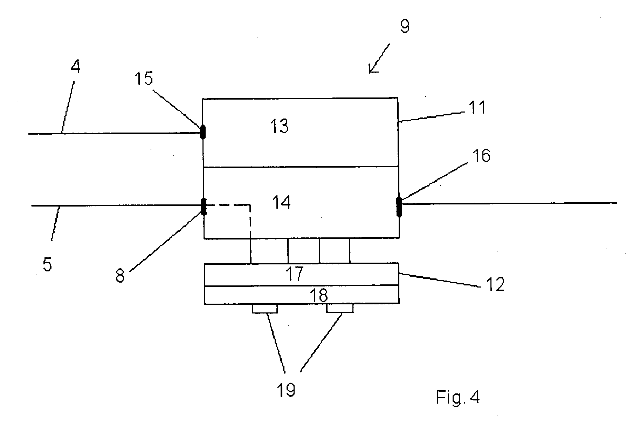

Das erste Installationsgerät (Hauptstelle) 9 ist zweiteilig aufgebaut und besteht aus einem Schaltmodul 11 und einem Applikationsmodul 12 (Figur 4). Das Schaltmodul 11 umfasst eine Spannungsversorgung 13 und typspezifische elektrische Bauteile 14, die je nach Typ als Schaltrelais, Jalousiesteuerung oder Dimmereinsatz ausgebildet sein können. Die Ader 4 des Leitungssystems 3 ist an einem Anschluss 15 des Schaltmoduls 11 mit der Spannungsversorgung 13 verbunden, während die Ader 5 des Leitungssystems 3 und die Last 1 an Anschlüssen 8 und 16 des Schaltmoduls 11 kontaktiert sind. Über den Anschluss 8 wird eine Verbindung zum zweiten Installationsgerät 10 geschaffen, wobei die eingangsseitige Verbindung mit dem Schaltmodul 11 intern an das Applikationsmodul 12 weitergeleitet wird. Das Applikationsmodul 12 ist mechanisch und elektrisch mit dem Schaltmodul 11 lösbar verbunden. Das Applikationsmodul 12 beinhaltet die funktionsgemäße Steuerelektronik 17 (Dimmer, Jalousie) sowie die Sensorik 18 zur Bedienung des ersten Installationsgerätes 9, beispielsweise Bedienelemente 19 oder drahtlose Schnittstellen (nicht dargestellt), die per Funk- oder Infrarotsignale bedienbar sind.

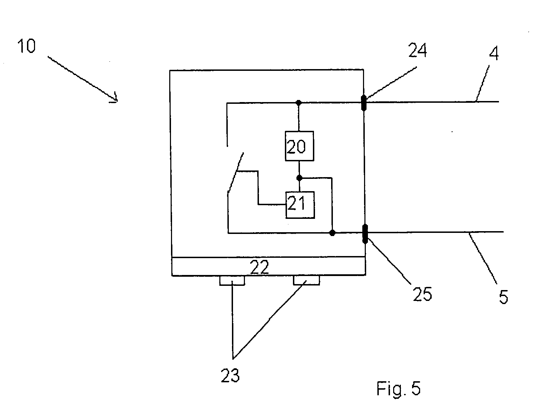

Das zweite Installationsgerät (Nebenstelle) 10 ist einteilig aufgebaut und beinhaltet eine Baugruppe 20 zur Energieversorgung und eine Baugruppe 21 zur Telegrammerzeugung, die die jeweilige Systemintelligenz, z. B. in Form eines Mikroprozessors, beinhaltet (Figur 5). Frontseitig ist eine Sensorik 22 zur Bedienung des zweiten Installationsgerätes 10, beispielsweise Bedienelemente 23, angeordnet. In einer weiteren, nicht dargestellten Ausführung mit einem separaten Netzteil sind auch zusätzliche drahtlose Schnittstellen möglich, die per Funk- oder Infrarotsignale bedienbar sind. Die Adern 4 und 5 des Leitungssystems 3 sind an Anschlüssen 24 und 25 kontaktiert und intern mit den Baugruppen 20 und 21 verbunden.

Eine notwendige Energieversorgung des zweiten Installationsgerätes 10 erfolgt über das Leitungssystem 3 zum ersten Installationsgerät 9 und die angeschlossene Last 1. Der Pfad verläuft dabei von der externen Energieversorgung, über die Ader 4, die Baugruppe 20 zur Energieversorgung in dem zweiten Installationsgerät 10, die Ader 5, durch das erste Installationsgerät 9 und über die Last 1 zurück zur externen Energieversorgung. Die Energie wird in dem zweiten Installationsgerät 10 in der internen, vorzugsweise kapazitiv wirkenden, Baugruppe 20 gepuffert. Die Energieversorgung der Baugruppe 20 erfolgt stetig, vorteilhafterweise auch während der Telegrammübertragung. Die Gestaltung und der Umfang des Telegramms sind so gewählt, dass die benötigte Energiemenge im Bereich von wenigen Milliwatt liegt und jederzeit trotz der angeschlossenen Last 1 abgegriffen werden kann. Eine separate Quelle ist nicht notwendig, so dass das vorhandene Leitungssystem 3 weiterhin genutzt werden kann.

Die Anordnung und Ansteuerung von Bedienelementen 19 und 23 ist an den beteiligten Installationsgeräten 9 und 10 gleich und vorzugsweise vordefiniert, so dass sich hierdurch eine einheitliche Bedienmethodik ergibt. Den Bedienelementen 19 und 23 sind feste Funktionalitäten zugeordnet, wie z. B. An, Aus, Auf- oder Abdimmen, Szene, die durch unterschiedlich lange Betätigungen weiter differenziert sind.

In dem zweiten Installationsgerät 10 lösen Bedienaktionen innerhalb der Baugruppe 21, vorzugsweise unter Nutzung eines Mikroprozessors, eine Generierung digitaler Signale aus, wobei die Ader 4 und die Ader 5 signalgemäß kurzgeschlossen werden. Die Signale werden in Form eines Telegramms zusammengefasst und über diese Leitungsverbindung an das Applikationsmodul 12 des ersten Installationsgerätes 9 übertragen. Dort wird das Telegramm in eine definierte Schaltaktion an einer Last 1 umgesetzt.

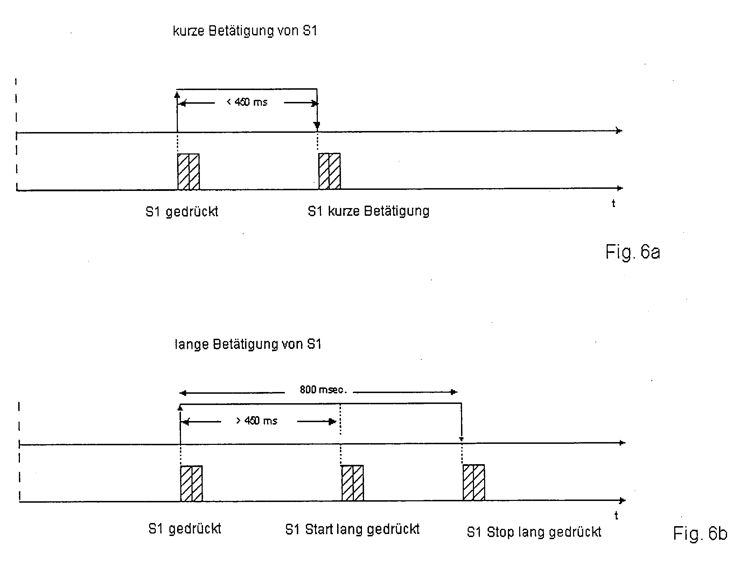

Das Telegramm beinhaltet Informationen über das genutzte Bedienelement 23 und die Bediendauer. Das Unterscheidungskriterium für eine kurze oder lange Bediendauer kann z. B. 450 ms betragen. Eine Betätigung länger als 5 sec führt automatisch zu einem Timeout. In Figur 6a und in Figur 6b sind typische Telegramme für eine kurze Betätigung und eine lange Betätigung eines Bedienelementes 23 dargestellt, wobei eine kurze Betätigung beispielsweise ein Einschalten der Last bewirkt, während eine lange Betätigung ein "Hochfahren" der Last bewirkt. An einem anderen Bedienelement 23 kann beispielsweise ein Ausschalten und "Runterfahren" der Last erfolgen. Zuerst wird das jeweilige Bedienelement 23, hier S1, identifiziert und als Information in das Telegramm hinterlegt. Bei einer Betätigungszeit unterhalb von 450 ms wird des weiteren die Information über eine kurze Betätigung dem Telegramm hinzugefügt (Figur 6a). Bei einer langen Betätigungszeit wird ebenfalls zuerst das jeweilige Bedienelement 23 identifiziert und als Information in das Telegramm hinterlegt und bei einer Betätigungszeit länger als 450 ms des weiteren die Information über eine lange Betätigung dem Telegramm hinzugefügt. Abschließend folgt die Information über das Ende der Betätigung (Figur 6b).

Das Telegramm wird unidirektional an das erste Installationsgerät 9 übermittelt, so dass die Systemkomponenten prinzipiell in Transmitter (zweite Installationsgeräte, Taster, Multi-Switch, Zentraleinheit, Windsensor ...) und in Receiver (erste Installationsgeräte, Schaltmodule) unterteilt sind. Um Kollisionen mit anderen Telegrammen auf derselben Leitung zu vermeiden, arbeiten alle Nebenstellen einheitlich nach dem Prinzip "listen before talk". Das Telegramm ist digital und umfasst beispielsweise 2 Bytes bestehend aus der Information (Bedienelement, Bediendauer) und deren Wiederholung. Typischerweise dauert ein solches Telegramm 64ms. Die benötigte Energie liegt im Bereich weniger Mikroampere (50 - 200 Mikroampere per Unit).

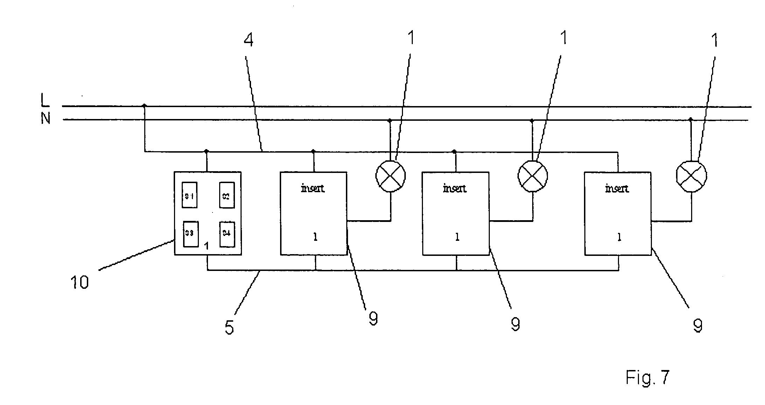

Beispielhaft weisen in den Figuren 3, 7-9 alle ersten Installationsgeräte 9 und auch alle zweiten Installationsgeräte 10 jeweils vier Bedienelemente (S1-S4), wobei in den Figuren 7-9 eine stark schematisierte Darstellung des ersten Installationsgerätes 9 gewählt worden ist. Die Bedienelemente S1 und S3 sind dabei zum An- und Ausschalten bzw. Auf und Abdimmen einer Last 1 definiert, wobei eine kurze Betätigung von S1 das Einschalten und eine lange Betätigung das Aufdimmen der Last 1 bewirkt. Eine kurze Betätigung von S3 bewirkt das Ausschalten und eine lange Betätigung das Abdimmen der Last 1.

Die Bedienelemente S2 und S4 sind als Szenetaster definiert. Die Einstellung individueller Dimmzustände von parallel geschalteten Lasten 1 (Figur 7) für eine Szene erfolgt jeweils mittels lokaler Einstellung eines Dimmwertes an dem jeweiligen Installationsgerät 9. Anschließend wird lokal eines der Bedienelemente S2 oder S4 betätigt und die Bedienaktion (Bedienelement, Bediendauer) dem Dimmwert zugeordnet. Bei einer Betätigung des entsprechenden Bedienelementes S2 oder S4 an einem zweiten Installationsgerät 10 werden dann auf Grund der übermittelten Telegramminformation die jeweilig zugeordneten Lastzustände in den ersten Installätionsgeräten 9 abgerufen. Beispielsweise ergibt sich hierdurch die Möglichkeit mehrere Installationsgeräte 9 bei Betätigung des Szenetasters S2 auf 30 %, 50 % und 80 % Leistung einzustellen.

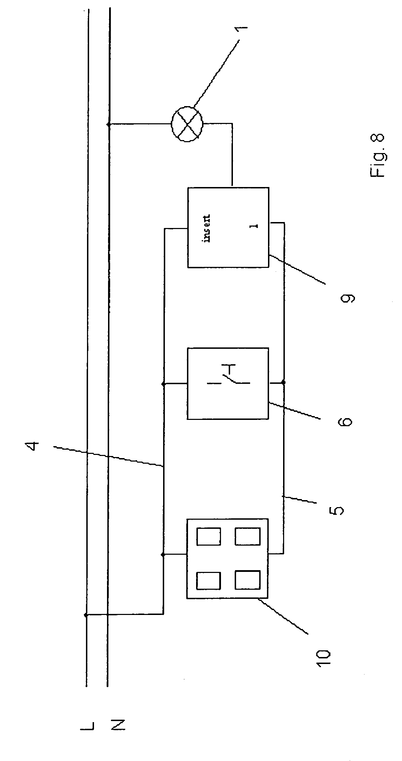

Weiterhin ist eine Kombination mit einem mechanischen Taster 6 als Nebenstelle möglich, da die grundsätzliche Installationsmethode beibehalten wird (Figur 8). Der mechanische Taster 6 dominiert immer die elektronischen Nebenstellen 10, da dieser Taster 6 im betätigten Zustand immer einen Kurzschluss der Ader 5 gegen Phase darstellt. Eine kurze Betätigung führt dabei ausgehend vom Zustand der Last 1 in den gegensätzlichen Zustand (von An zu Aus bzw. von Aus zu An). Eine lange Betätigung zum gegensätzlichen Auf- oder Abdimmen.

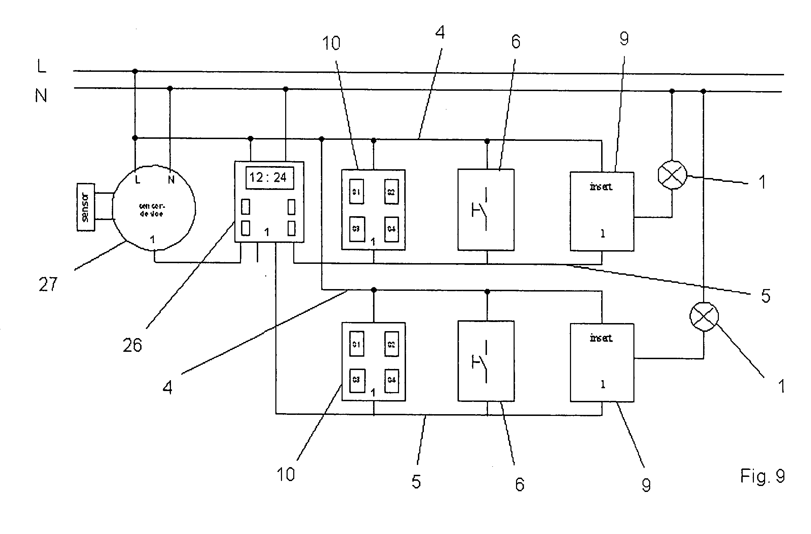

Die Installationsgeräte 9, 10 lassen sich zu Linien, Gruppen und weiteren Systemen zusammenfassen, wobei insbesondere Dimmfunktionalitäten und Jalousiesteuerungen denkbar sind. Des weiteren kann die Erfindung bei der Integration von weiteren Funktionalitäten in Installationssysteme Verwendung finden. Beispielsweise lassen sich zusätzliche Zentralsteuerungen 26 und Signalgeber 27 (Schaltuhren, Bewegungsmelder, Funkkomponenten) sowie Zeit, Wind oder Licht gesteuerte Elemente in das System integrieren (Figur 9). Jedes Installationsgerät 10 ist mit einem Nebenstellenanschluss 8 des zugeordneten ersten Installationsgerätes 9 verbunden. Optional können die Installationsgeräte 10 auch mit 3-Leiter-Technik ausgestattet sein, d. h. mit 2-adriger Anbindung an das Versorgungsnetz und einer Telegrammader.

### Bezugszeichenliste

- 1: Last
- 2: Schalter
- 3: Leitungssystem
- 4: Ader
- 5: Ader
- 6: mechanischer Taster
- 7: Installationsgerät mit Dimmfunktion
- 8: Anschluss (Nebenstelle)
- 9: erstes Installationsgerät (Hauptstelle)
- 10: zweites Installationsgerät (Nebenstelle)
- 11: Schaltmodul
- 12: Applikationsmodul
- 13: Spannungsversorgung
- 14: typspezifische Bauteile
- 15: Anschluss (Versorgung)
- 16: Anschluss (Last)
- 17: Steuerelektronik
- 18: Sensorik
- 19: Bedienelemente
- 20: Baugruppe (Spannungsversorgung)
- 21: Baugruppe (Telegramm)
- 22: Sensorik
- 23: Bedienelemente S1 - S4
- 24: Anschluss (Versorgung)
- 25: Anschluss (Telegramm)
- 26: Zentralsteuerung
- 27: Signalgeber

## Patentansprüche

1. Elektrisches Installationssystem umfassend mindestens ein erstes Installationsgerät (9), das eine angeschlossene Last (1) schaltet, mindestens ein zweites Installationsgerät (10) mit einer Bediensensorik (22) und mindestens ein zweiadriges Leitungssystem (3), durch das die beiden Installationsgeräte (9, 10) elektrisch verbunden sind, wobei eine Ader (4) des Leitungssystems (3) mit einer externen Energieversorgung verbunden ist und eine Ader (5) die Installationsgeräte (9, 10) untereinander verbindet, **dadurch gekennzeichnet,**
**dass** das zweite Installationsgerät (10) mehrere Bedienelemente (23) aufweist,
**dass** das zweite Installationsgerät (10) eine Baugruppe (20) zur internen Energieversorgung aufweist, die über das Leitungssystem (3) zum ersten Installationsgerät (9) und über die angeschlossene Last (1) mit Energie versorgt wird,
**dass** das zweite Installationsgerät (10) eine Baugruppe (21) zur Telegrammerzeugung aufweist, und
**dass** durch eine Betätigung der Bediensensorik (22) des zweiten Installationsgerätes (10) in der Baugruppe (21) digitale Signale generiert und in Form eines Telegrammes zusammengefasst werden, das Informationen über das genutzte Bedienelement (23) und über die Bediendauer der Bediensensorik (22) beinhaltet, und das über die Ader (5), die die Installationsgeräte (9, 10) miteinander verbindet, an das erste Installationsgerät (9) übertragen wird und das in dem ersten Installationsgerät (9) eine Schaltaktion für die angeschlossene Last (1) generiert.

2. Elektrisches Installationssystem nach einem der vorhergehenden Patentansprüche, **dadurch gekennzeichnet, dass** die Energieversorgung innerhalb des zweiten Installationsgerätes (10) über ein kapazitives Bauteil erfolgt.

3. Elektrisches Installationssystem nach einem der vorhergehenden Patentansprüche, **dadurch gekennzeichnet, dass** das die Energieversorgung des zweiten Installationsgerätes (10) während der Telegrammübermittlung erfolgt.

4. Elektrisches Installationssystem nach einem der vorhergehenden Patentansprüche, **dadurch gekennzeichnet, dass** das Telegramm in einem Mikroprozessor des zweiten Installationsgerätes (10) erzeugt wird.

5. Elektrisches Installationssystem nach einem der vorhergehenden Patentansprüche, **dadurch gekennzeichnet, dass** die Bediendauer in kurze und lange Betätigungen unterschieden wird.

6. Elektrisches Installationssystem nach einem der vorhergehenden Patentansprüche, **dadurch gekennzeichnet, dass** das erste Installationsgerät (9) ein Schaltmodul (11) und ein Applikationsmodul (12) mit einer Bediensensorik (18) umfasst.

7. Elektrisches Installationssystem nach einem der vorhergehenden Patentansprüche, **dadurch gekennzeichnet, dass** das zweite Installationsgerät (10) elektrisch mit dem Schaltmodul (11) des ersten Installationsgerätes (9) und funktional mit dem Applikationsmodul (12) des ersten Installationsgerätes (9) verbunden ist.

8. Elektrisches Installationssystem nach einem der vorhergehenden Patentansprüche, **dadurch gekennzeichnet, dass** ein zweites Installationsgerät (10) zentral unterschiedliche Lastzustände an mehreren ersten Installationsgeräten (9) ansteuern kann.

9. Elektrisches Installationssystem nach einem der vorhergehenden Patentansprüche, **dadurch gekennzeichnet, dass** erste elektrische Installationsgeräte (9) als Schalt-, Dimm- oder Jalousieeinsätze ausgebildet sind.

10. Elektrisches Installationssystem nach einem der vorhergehenden Patentansprüche, **dadurch gekennzeichnet, dass** zweite Installationsgeräte (10) als Taster, Mehrfachtaster, Zentralsteuerung (26) oder Signalgeber (27) ausgebildet sind.

11. Elektrisches Installationssystem nach einem der vorhergehenden Patentansprüche, **dadurch gekennzeichnet, dass** die Signalgeber (27) als Schaltuhr, Bewegungsmelder, Funkkomponente, Windsensor oder Lichtsensor ausgebildet sind.

12. Elektrisches Installationssystem nach einem der vorhergehenden Patentansprüche, **dadurch gekennzeichnet, dass** erste Installationsgeräte (9) zu Linien, Gruppen und weiteren Systemen zusammengefasst werden.

## Claims

1. An electrical installation system comprising at least one first installation unit (9) which switches a connected load (1); at least one second installation unit (10) having an operating sensor system (22); and at least one two-core line system (3) by which the two installation units (9, 10) are electrically connected, wherein one core (4) of the line system (3) is connected to an external energy supply and one core (5) connects the installation units (9, 10) to one another, **characterized in that**
the second installation unit (10) has a plurality of operating elements (23);
the second installation unit (10) has an assembly (20) for an internal energy supply which is supplied with energy via the line system (3) to the first installation unit (9) and via the connected load (1);
the second installation unit (10) has an assembly (21) for telegram generation; and
digital signals are generated and are summarized in the form of a telegram by an actuation of the operating sensor system (22) of the second installation unit (10) in the assembly (21), said telegram containing information on the operating element (23) used and on the operation time of the operating sensor system (22) and being transmitted to the first installation unit (9) via the core (5) which connects the installation units (9, 10) to one another and generating a switching action for the connected load (1) in the first installation unit (9).

2. An electrical installation system in accordance with the preceding claim, **characterized in that** the energy supply within the second installation unit (10) takes place via a capacitive component.

3. An electrical installation system in accordance with one of the preceding claims, **characterized in that** the energy supply of the second installation unit (10) takes place during the telegram transmission.

4. An electrical installation system in accordance with any one of the preceding claims, **characterized in that** the telegram is generated in a microprocessor of the second installation unit (10).

5. An electrical installation system in accordance with any one of the preceding claims, **characterized in that** the operating time is differentiated into short and long actuations.

6. An electrical installation system in accordance with any one of the preceding claims, **characterized in that** the first installation unit (9) comprises a switching module (11) and an application module (12) having an operating sensor system (18).

7. An electrical installation system in accordance with any one of the preceding claims, **characterized in that** the second installation unit (10) is electrically connected to the switching module (11) of the first installation unit (9) and is functionally connected to the application module (12) of the first installation unit (9).

8. An electrical installation system in accordance with any one of the preceding claims, **characterized in that** a second installation unit (10) can centrally control different load states at a plurality of first installation units (9).

9. An electrical installation system in accordance with any one of the preceding claims, **characterized in that** first electrical installation units (9) are configured as switching sets, dimming sets or shutter sets.

10. An electrical installation system in accordance with any one of the preceding claims, **characterized in that** second installation units (10) are formed as push-buttons, multiple push-buttons, a central control (26) or a signal generator (27).

11. An electrical installation system in accordance with any one of the preceding claims, **characterized in that** the signal generators (27) are configured as a timer, a motion sensor, a radio component, a wind sensor or a light sensor.

12. An electrical installation system in accordance with any one of the preceding claims, **characterized in that** first installation units (9) are combined to form rows, groups and further systems.

## Revendications

1. Système d'installation électrique incluant au moins un premier appareil d'installation (9), qui commute une charge branchée (1), au moins un second appareil d'installation (10) avec un système de capteurs de service (22) et au moins un système de lignes à deux fils (3), au moyen duquel les deux appareils d'installation (9, 10) sont reliés électriquement, dans lequel un fil (4) du système de lignes (3) est connecté à une alimentation d'énergie externe et un fil (5) connecte les appareils d'installation (9, 10) l'un avec l'autre,
**caractérisé**
**en ce que** le second appareil d'installation (10) comprend plusieurs éléments de service (23),
**en ce que** le second appareil d'installation (10) comprend un groupe structurel (20) pour l'alimentation d'énergie interne, qui est alimenté en énergie via le système de lignes (3) vers le premier appareil d'installation (9) et la charge branchée (1),
**en ce que** le second appareil d'installation (10) comprend un groupe structurel (21) pour la génération de télégrammes, et
**en ce que** par un actionnement du système de capteurs de service (22) du second appareil d'installation (10), des signaux numériques sont générés dans le groupe structurel (21) et sont regroupés sous la forme d'un télégramme, qui contient des informations sur l'élément de service (23) utilisé et sur la durée de service du système de capteurs de service (22), et qui est transmis au premier appareil d'installation (9) via le fil (5) qui relie les appareils d'installation (9, 10) l'un à l'autre, et qui génère dans le premier appareil d'installation (9) une action de commutation pour la charge branchée (1).

2. Système d'installation électrique selon l'une des revendications précédentes, **caractérisé en ce que** l'alimentation en énergie a lieu à l'intérieur du second appareil d'installation (10) via un composant capacitif.

3. Système d'installation électrique selon l'une des revendications précédentes, **caractérisé en ce que** l'alimentation en énergie du second appareil d'installation (10) a lieu pendant la transmission du télégramme.

4. Système d'installation électrique selon l'une des revendications précédentes, **caractérisé en ce que** le télégramme est engendré dans un microprocesseur du second appareil d'installation (10).

5. Système d'installation électrique selon l'une des revendications précédentes, **caractérisé en ce que** la durée de service est différenciée en actionnements courts et en actionnements longs.

6. Système d'installation électrique selon l'une des revendications précédentes, **caractérisé en ce que** le premier appareil d'installation (9) inclut un module de commutation (11) et un module d'application (12) avec un système de capteurs de service (18).

7. Système d'installation électrique selon l'une des revendications précédentes, **caractérisé en ce que** le second appareil d'installation (10) est relié électriquement avec le module de commutation (11) du premier appareil d'installation (9) et fonctionnellement avec le module d'application (12) du premier appareil d'installation (9).

8. Système d'installation électrique selon l'une des revendications précédentes, **caractérisé en ce qu'**un second appareil d'installation (10) est capable de piloter de manière centrale des états de charge différents au niveau de plusieurs premiers appareils d'installation (9).

9. Système d'installation électrique selon l'une des revendications précédentes, **caractérisé en ce que** les premiers appareils d'installation électrique (9) sont réalisés sous forme d'un insert de commutation, d'un insert variateur, ou d'un insert à persienne.

10. Système d'installation électrique selon l'une des revendications précédentes, **caractérisé en ce que** les seconds appareils d'installation (10) sont réalisés sous forme de touches, de touches multiples, de commande centralisée (26) ou d'émetteurs de signaux (27).

11. Système d'installation électrique selon l'une des revendications précédentes, **caractérisé en ce que** les émetteurs de signaux (27) sont réalisés sous forme d'horloge de commutation, d'avertisseur de déplacement, de composant radio, de capteur de vent ou de capteur de lumière.

12. Système d'installation électrique selon l'une des revendications précédentes, **caractérisé en ce que** les premiers appareils d'installation (9) sont regroupés par ligne, par groupe et par d'autres systèmes.
